# EUROPÄISCHE PATENTANMELDUNG

(11) **EP 0 545 214 A2**
(43) Veröffentlichungstag der Anmeldung: **09.06.1993**
(21) Anmeldenummer: 92119945.1
(22) Anmeldetag: 24.11.1992
(51) Int. Cl.: B01D 5/00, B01D 53/38, C11B 1/10

(54) **Verfahren zur Abluftreinigung aus Anlagenteilen von Ölmühlen**

(30) Priorität: 04.12.1991 DE 4140006
(71) Anmelder: Veitsch-Radex Aktiengesellschaft für feuerfeste Erzeugnisse, A-1040 Wien (AT)
(72) Erfinder: Doubrawa, Franz, A-2512 Tribuswinkel (AT); Joksch, Martin, A-2500 Baden (AT)
(74) Vertreter: Becker, Thomas, Dr., Dipl.-Ing.

(57) **Zusammenfassung**

Die Erfindung betrifft ein Verfahren zur Abluftreinigung aus Anlagenteilen von Ölmühlen (10), bei dem die aus der Anlage abgezogene Abluft (14) - nach teilweiser Ausschleusung (18) - im Kreislauf in die Anlage (10) zurückgeführt wird.

## Beschreibung

Die Erfindung betrifft ein Verfahren zur Reinigung der Abluft aus Anlagenteilen von Ölmühlen. Sowohl der Stand der Technik als auch die Erfindung werden nachstehend anhand der Abluftreinigung aus sogenannten DTK-Anlagen näher beschrieben, jedoch nur beispielhaft. Insoweit ist das Verfahren auch zur Reinigung der Abluft aus anderen Anlagenteilen geeignet.

Sogenannte DTK-Anlagen (Desolventiser-Toaster-KühlerAnlagen), teilweise auch nur "Toaster" genannt, stellen ein Behandlungsaggregat bei der Verarbeitung von Saatgut, beispielsweise Raps, Sonnenblumen oder dergleichen, zu entsprechenden Genußölen dar.

Der prinzipielle Verfahrensablauf ist wie folgt: Die Saat gelangt zu einer Aufbereitung. In einer ersten Aufbereitungsstufe erfolgt eine Flockierung zur ersten Aufschließung des Saatguts. Dieses wird anschließend erwärmt und gelangt danach in Pressen, wo ein Großteil des Ölgehaltes ausgepreßt wird. Das Preßöl gelangt nach einer Reinigung zu einer Entschleimungsanlage. Der warme Preßkuchen wird in eine Extraktionsstufe geführt. Dabei erfolgt das Auswaschen des noch vorhandenen Öls mit einem Lösungsmittel, beispielsweise Hexan. Der verbleibende Extraktionsschrot wird dann in der DTK-Anlage von restlichem Lösungsmittel befreit, in eine lagerfähige Konsistenz gebracht und in Schrotsilos gefördert.

Die Mischung aus Preß- und Extraktionsöl gelangt in die Entschleimungsanlage, in der die Mischung von Wasser, wasserlöslichen Inhaltsstoffen und Schwebeteilchen befreit wird. Nach einer abschließenden Kühlung wird das nun fertig entschleimte Rohöl in Lagertanks gefördert.

Die DTK-Anlage ist üblicherweise in mehreren, übereinander angeordneten Stufen aufgebaut. Dabei durchläuft das zu behandelnde Gut die Anlage von oben nach unten und wird zwischen den Stufen über entsprechende Zellradschleusen weitergegeben. In den ersten, oberen Stufen wird das Schrot-/Lösungsmittelgemisch mit Wasserdampf behandelt und zusätzlich über eine externe Beheizung, beispielsweise dampfbeheizte Doppelböden, erwärmt. Auf diese Weise werden Lösungsmittelbestandteile aus dem Feststoff (Schrot) ausgetrieben. In den weiteren Stufen der DTK-Anlage erfolgt dann eine Trocknung (sogenannte Toaster-Stufe) und schließlich eine Kühlung des gereinigten Schrots.

Zum Trocknen und Kühlen des Restschrotes der genannten Ölsaaten wird üblicherweise Frischluft verwendet. Die danach anfallende Abluft ist in nicht unerheblichem Umfang mit Geruchsstoffen, aber auch Benzinresten und Festbestandteilen, zum Beispiel Faseranteilen der Pflanze, belastet. Ein besonderes Problem stellen die Geruchsstoffe dar. Werden sie - wie bisher - mit der Abluft ins Freie geleitet, führt dies zu erheblichen Geruchsbelästigungen in der Umwelt. Auch eine im Abluftweg angeordnete "Entstaubungseinrichtung" kann das Problem der Geruchsbelästigung durch die gasförmigen Geruchsstoffe nicht verhindern.

Hier setzt die der Erfindung zugrundeliegende Aufgabe an. Dabei wird nach einer Möglichkeit gesucht, die Abluft aus den genannten Anlagen einer Ölmühle so aufzubereiten, daß die Geruchsbelästigung minimiert und vorzugsweise eliminiert wird.

Zur Lösung dieser Aufgabe hat die Erfindung erkannt, daß eine Kreislaufführung des Abluftstromes notwendig ist. Wird die Abluft - zumindest teilweise - im Kreislauf geführt, also nach Entnahme aus der Anlage später wieder in diese zurückgeführt, so führt dies zwangsläufig zu einer Aufkonzentrierung der entsprechenden Geruchs- und sonstigen Schadstoffe. Dabei hat die Erfindung weiter erkannt, daß es möglich ist, die erheblichen Abluftmengen aufbereitungstechnisch trotzdem zu bewältigen, wenn ein Teilstrom der aufkonzentrierten Abluft abgezogen, gereinigt und dann weggeführt wird und gleichzeitig der aufgeschleuste Abluftstrom durch eine entsprechende Menge Frischluft ersetzt wird, so daß der zirkulierende Luftstrom insgesamt konstant bleibt.

Eine direkte Reinigung der Abluft aus der Anlage kommt dagegen wegen der großen Volumenströme nicht in Frage, weil entsprechende Reinigungseinrichtungen sowohl verfahrenstechnisch, wie auch kostenmäßig uneffektiv und nicht zu bewältigen wären.

In ihrer allgemeinsten Ausführungsform betrifft die Erfindung ein Verfahren zur Abluftreinigung aus Anlagenteilen von Ölmühlen mit folgenden, im strömungstechnischen Sinne aufeinanderfolgenden Schritten:
- Die Wärme, Feuchtigkeit und Geruchsstoffe enthaltende Abluft wird aus der Anlage abgezogen,
- die Abluft wird gekühlt und getrocknet,
- ein Teilstrom der Abluft wird ausgeschleust, gereinigt und weggeführt,
- dem verbleibenden Abluft-Reststrom wird eine der abgezogenen Abluftmenge im wesentlichen äquivalente Frischluftmenge zugeführt,
- die aus dem Abluft-Reststrom und der Frischluft bestehende Abluftmenge wird an einer von der Entnahmestelle getrennten Stelle der Anlage wieder zugeführt.

In Übereinstimmung mit dem Stand der Technik wird also zunächst Abluft aus der Anlage weggeführt. Diese wird aber nun nicht einfach über einen Schornstein ins Freie geleitet, sondern zunächst gekühlt und getrocknet. Bei der Kühlung wird Abwärme frei, die zur direkten oder indirekten Wärmerückgewinnung genutzt werden kann. Ebenfalls fällt bei der Trocknung ein (warmes) Kondensat an, das beispielsweise als Kesselspeisewasser zur anschließenden Dampfeinspeisung in die (DTK-)Anlage eingesetzt wird. Sowohl die Nutzung der Abwärme als auch die Nutzung des Kondensats bieten erhebliche energetische und kostenmäßige Vorteile, die durch eine einfache Ausschleusung der Abluft in die Umgebungsatmosphäre nicht möglich waren. So kann das Speisewasser zu Gewinnung des Direktdampfes in den oberen Stufen der DTK-Anlage quasi in-situ gewonnen werden.

Bis hierhin ist jedoch das Problem der Beseitigung der Geruchsstoffe noch nicht gelöst.

Dazu wird ein Teilstrom der Abluft anschließend ausgeschleust und gereinigt. Dieser Verfahrensschritt wird nachstehend noch näher erläutert.

Um den für eine Kreislaufführung der Abluft notwendigen konstanten Volumenstrom sicherzustellen, wird dem verbleibenden Abluft-Reststrom anschließend Frischluft zugeführt, wobei die Frischluftmenge im wesentlichen der zuvor ausgeschleusten Abluftmenge entspricht.

Die so aus dem Abluft-Reststrom und der zugeführten Frischluft bestehende Abluftmenge wird schließlich an einer von der Entnahmestelle der Abluft getrennten Stelle der DTK-Anlage wieder zugeführt. Hiermit wird der "Kreislauf" geschlossen.

Es ist offensichtlich, daß bei dieser Kreislaufführung eine Aufkonzentrierung der Fremdstoffe, insbesondere Geruchsstoffe, stattfindet. Diese Aufkonzentrierung wird bewußt in Kauf genommen, sie stellt sogar ein wesentliches Merkmal des erfindungsgemäßen Verfahrens dar.

Auf diese Weise gelingt es nämlich, einen entsprechend aufkonzentrierten Teilstrom der Abluft an der genannten Stelle auszuschleusen und damit - mit sehr viel geringeren Volumenströmen - eine effektive, anlagenmäßig beherrschbare und wirtschaftliche Reinigung der Abluft durchzuführen.

Bei entsprechender Fahrweise der Anlage und Einstellung der ausgeschleusten Abluftmengen und zugeführten Frischluftmengen stellt sich ein in etwa konstanter Abluftstrom mit einer bestimmten Konzentration an Geruchs- und anderen Fremdstoffen ein.

Die Reinigung der ausgeschleusten Abluft kann auf unterschiedlichste Art und Weise erfolgen. Eine besonders vorteilhafte Ausführungsform sieht vor, die ausgeschleuste Abluft in einem Biofilter zu reinigen. Derartige Filter sind - allerdings in anderem Zusammenhang - bekannt. Auch eine thermische, katalytische, absorptive oder adsorptive Reinigung der ausgeschleusten Abluft ist möglich.

Als Ergebnis wird aus der Reinigungsstufe Reinluft abgezogen, die dann - ohne Geruchsbelästigung und ohne schädliche Fremdstoffe - in die Umgebungsatmosphäre abgegeben werden kann.

Um die beschriebene Kreislaufführung der Abluft sicherzustellen, sollte der zirkulierende Luftstrom geschlossen ausgebildet sein.

Zur Optimierung der Abluftreinigung ist nach einer vorteilhaften Ausführungsform vorgesehen, vor dem Trocknungs- und Kühlschritt einen Staubfilter anzuordnen und die Abluft durch diesen zu führen, damit auch in der Abluft befindliche Feststoffteilchen, beispielsweise Faseranteile aus der Pflanze, abgetrennt werden können. Dies erhöht letztendlich auch die Reinheit der aus der Reinigungsanlage in die Umgebungsatmosphäre abgegebenen Luft.

Zur Einstellung der zirkulierenden Abluftströmung kann ein Ventilator vorgesehen werden, wobei der zirkulierende Luftstrom vorzugsweise so über den Ventilator geführt wird, daß zwischen dem Ventilator und der Zuführstelle für die Frischluft ein Überdruck und zwischen der Zuführstelle für die Frischluft und dem Ventilator ein Unterdruck ausgebildet wird. Auf diese Weise werden mit dem neuen Verfahren in einer Anlage gleichbleibende Druckverhältnisse ermöglicht. Dabei kann auch eine bekannte, konventionelle Anlage entsprechend umgebaut (nachgerüstet) werden.

Es wurde schon erwähnt, daß die während der Kühl-/Trocknungsstufe anfallende Abwärme wärmetechnisch genutzt werden kann. Hierzu ist vorgesehen, die Abwärme über einen Rekuperator zu führen. Die Wärme kann dann entweder an irgendeiner Stelle des eingangs beschriebenen Aufbereitungsverfahrens genutzt werden, wo sie benötigt wird, sie kann aber auch an anderer Stelle, zum Beispiel zur Beheizung von Schwimmbädern oder Büro- und Wohnräumen, genutzt werden.

Ein weiterer Vorteil besteht darin, daß die nach dem Reinigungsschritt anfallende gereinigte Abluft zumindest teilweise als Frischluft zum Ausgleich der ausgeschleusten Abluftmenge genutzt werden kann.

Besonders vorteilhaft ist es, wenn die Menge der zur Abluftreinigung aus dem Kreislauf abgezogenen Abluft und/oder die Menge der - im strömungstechnischen Sinne danach - zugeführten Frischluft in Abhängigkeit von der Konzentration der in der Abluft befindlichen Geruchs- bzw. sonstigen Fremdstoffe geregelt und/oder gesteuert wird. Dies kann über entsprechende Meßeinrichtungen entlang des Abluftweges erreicht werden.

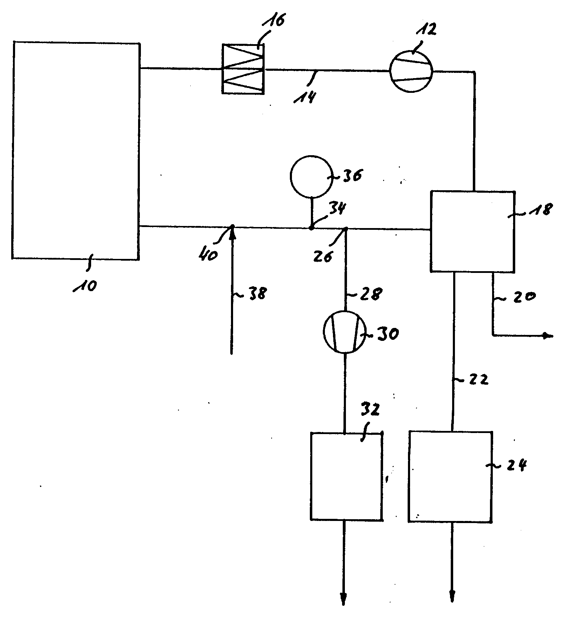

Die Erfindung wird nachstehend anhand eines Ausführungsbeispieles näher beschrieben. Dabei zeigt die einzige Figur - in schematisierter Darstellung - ein Fließbild des erfindungsgemäßen Verfahrens.

Mit dem Bezugszeichen 10 ist eine DTK-Anlage gekennzeichnet. Über einen Ventilator 12, der entlang einer Abluftleitung 14 angeordnet ist, wird die warme, feuchte und Geruchsstoffe enthaltende Abluft aus der DTK-Anlage 10 abgesaugt und zunächst durch einen mechanischen Staubfilter 16 geführt.

Die Abluft gelangt danach in ein mit dem Bezugszeichen 18 gekennzeichnetes Aggregat, wo sie gekühlt und getrocknet wird. Dabei anfallende Abwärme wird über eine Leitung 20 weggeführt und über einen (nicht dargestellten) Rekuperator nutzbar gemacht.

Im Aggregat 18 während der Trocknung anfallendes Kondensat wird über eine weitere Leitung 22 ausgeschleust, in einer Einrichtung 24 aufbereitet und als sauberes Wasser schließlich weggeführt.

Die aus dem Aggregat 18 austretende Abluftleitung 14 weist ein Ventil 26 auf, das mit einer Leitung 28 verbunden ist, die mit einem Ventilator 30 in Verbindung steht, der einen Teilstrom der in der Abluftleitung 14 befindlichen gekühlten und getrockneten Abluft aus der Leitung 14 absaugt und in einen Biofilter 32 führt. Der Biofilter 32 und seine Funktion wird weiter unten näher beschrieben.

Im strömungstechnischen Sinne dem Ventil 26 nachgeschaltet ist ein weiteres Ventil 34 entlang der Abluftleitung 14 angeordnet, das mit einer Einrichtung 36 in Verbindung steht, mit der die Konzentrationen der in der Abluft befindlichen Geruchsstoffe und sonstigen Fremdstoffe bestimmt werden kann. Auch die Einrichtung 36 wird weiter unten näher erläutert.

Die Abluftleitung 14 führt schließlich vom Ventil 34 zurück zur DTK-Anlage 10, wobei entlang dieses Streckenabschnitts eine Frischluftleitung 38 in die Abluftleitung 14 einmündet.

An der Verbindungsstelle von Frischluftleitung 38 und Abluftleitung 14 ist ein Ventil 40 vorgesehen, das von der Einrichtung 36 so geregelt wird, daß die hier zugeführte Frischluftmenge der Luftmenge entspricht, die über die Leitung 28 in den Biofilter 32 ausgeschleust wird, um einen konstanten, zirkulierenden Kreislaufstrom der Abluft einzustellen.

Bei dieser Anordnung ergibt sich innerhalb der Abluftleitung 14 zwischen dem Ventilator 12 und dem Ventil 40 eine gewisser Überdruck in der Abluftleitung 14, der an der Ventilstelle bei 40 auf Atmosphärendruck kompensiert wird, während aufgrund der Wirkung des Ventilators 12 zwischen dem Ventil 40 und dem Ventilator 12 ein gewisser Unterdruck eingestellt wird.

Aufgrund der Kreislaufführung der Abluft kommt es zu einer Aufkonzentrierung der Geruchs- und sonstigen Fremdstoffe. Auf diese Weise wird über die Leitung 28 ein entsprechend aufkonzentrierter Abluftstrom abgezogen und in den Biofilter 32 geführt. Auf diese Weise kann - bei einem geringen Volumenstrom - eine hohe Effizienz der Abgasreinigung im Biofilter 32 erreicht werden. Nach Durchlaufen des Biofilters 32 wird von Geruchsstoffen und sonstigen Fremdstoffen befreite Reinluft abgezogen, die bei Bedarf als Frischluft der Leitung 38 zugeführt werden kann.

## Patentansprüche

1. Verfahren zur Abluftreinigung aus Anlagenteilen von Ölmühlen mit folgenden, im strömungstechnischen Sinne aufeinanderfolgenden Schritten:
1.1 Die Wärme, Feuchtigkeit und Geruchsstoffe enthaltende Abluft wird aus der Anlage abgezogen,
1.2 die Abluft wird gekühlt und getrocknet,
1.3 ein Teilstrom der Abluft wird ausgeschleust, gereinigt und weggeführt,
1.4 dem verbleibenden Abluft-Reststrom wird eine der abgezogenen Abluftmenge im wesentlichen äquivalente Frischluftmenge zugeführt,
1.5 die aus dem Abluft-Reststrom und der Frischluft bestehende Abluftmenge wird an einer von der Entnahmestelle getrennten Stelle der Anlage wieder zugeführt.

2. Verfahren nach Anspruch 1, bei dem der zirkulierende Abluftstrom geschlossen ausgebildet ist.

3. Verfahren nach Anspruch 1 oder 2, bei dem die Abluft vor dem Trocknungs- und Kühlschritt durch einen Staubfilter geführt wird.

4. Verfahren nach einem der Ansprüche 1 bis 3, bei dem der zirkulierende Luftstrom über einen Ventilator so geführt wird, daß zwischen dem Ventilator und der Zuführstelle für die Frischluft ein Überdruck und zwischen der Zuführstelle für die Frischluft und dem Ventilator ein Unterdruck besteht.

5. Verfahren nach einem der Ansprüche 1 bis 4, bei dem das während des Kühl- und Trocknungsschritts anfallende Kondensat aus der Abluft als Kesselspeisewasser zur anschließenden Dampfeinspeisung in die Anlage eingesetzt wird.

6. Verfahren nach einem der Ansprüche 1 bis 5, bei dem die während des Kühl- und Trocknungsschritts anfallende Abwärme einem Rekuperator zugeleitet wird.

7. Verfahren nach einem der Ansprüche 1 bis 6, bei dem die aus dem zirkulierenden Abluftstrom abgezogene Abluft durch einen Biofilter geführt und dort gereinigt wird.

8. Verfahren nach einem der Ansprüche 1 bis 6, bei dem die aus dem zirkulierenden Abluftstromluft abgezogene Abluft einem katalytisch arbeitenden Reinigungsprozeß unterworfen wird.

9. Verfahren nach einem der Ansprüche 1 bis 8, bei dem nach dem Reinigungsschritt anfallende gereinigte Abluft zumindest teilweise der Frischluftzufuhr beigemischt wird.

10. Verfahren nach einem der Ansprüche 1 bis 9, bei dem die Menge der zur Abluftreinigung aus dem Kreislauf abgezogenen Abluft und/oder die Menge der danach zugeführten Frischluft in Abhängigkeit von der Konzentration der in der Abluft befindlichen Geruchs- und/oder sonstigen Fremdstoffe geregelt und/oder gesteuert wird.
